# FASCICULE DE BREVET EUROPEEN

(11) **EP 0 588 692 B1**
(45) Date de publication et mention de la délivrance du brevet: **09.12.1998**
(21) Numéro de dépôt: 93402181.7
(22) Date de dépôt: 08.09.1993
(51) Int. Cl.: G01N 35/02, G01N 33/543

(54) **Appareil automatique de dosage immunologique**
Automatische Vorrichtung zur immunologischen Dosierung
Automatic immuno-assay apparatus

(30) Priorité: 11.09.1992 FR 9210850
(43) Date de publication de la demande: 23.03.1994
(73) Titulaire: MERCK S.A., 94736 Nogent-sur-Marne Cédex (FR)
(72) Inventeur: Uzan, Michel, F-93320 Pavillons-Sous-Bois (FR); Gicquel, Thierry, F-95800 Courdimanche (FR)
(74) Mandataire: Ramey, Daniel

(56) Documents cités:
- EP-A- 0 355 823
- EP-A- 0 410 645
- EP-A- 0 488 247
- WO-A-91/07662
- DE-A- 3 402 304
- FR-A- 2 655 426

## Description

L'invention concerne un appareil automatique de dosage immunologique d'au moins une substance dans une pluralité d'échantillons à analyser.

Un appareil de ce type a déjà été développé par le Demandeur et est décrit notamment dans la Demande Internationale PCT publiée sous le n° WO91/07662.

De façon résumée, cet appareil comprend :
- un module échantillons, comprenant une pluralité de tubes contenant les échantillons à analyser et portés par une couronne ou un plateau rotatif,
- un module réactifs, comprenant une couronne ou un plateau rotatif de support de tubes contenant le ou les réactifs utilisés pour les dosages à réaliser, au moins l'un de ces réactifs étant sous forme de particules magnétiques,
- un module réactionnel, comprenant une couronne ou un plateau rotatif portant une pluralité de tubes ou de cuvettes destinés à recevoir chacun une quantité déterminée d'un échantillon et une quantité déterminée d'un réactif approprié, avec un dispositif de lavage associé à ce module réactionnel,
- des moyens d'entraînement en rotation pas à pas de ces modules,
- des moyens permettant d'amener les quantités voulues d'échantillons et de réactifs dans les tubes ou les cuvettes de réaction,
- des moyens appropriés de lecture des résultats des réactions réalisées dans les tubes ou les cuvettes de réaction,
- et un système informatique de commande des différents modules et de leurs moyens d'entraînement, pour l'exécution d'une succession de cycles d'analyse.

Chaque cycle d'analyse comprend une série d'étapes constituant au moins une incubation immunologique, et une série d'étapes constituant une incubation de révélation, notamment une incubation enzymatique, chaque étape correspondant à un nombre de positions séquentielles d'un tube ou d'une cuvette de réaction dans le module réactionnel, le temps d'arrêt d'un tube ou d'une cuvette de réaction dans une position étant constant.

Le dispositif de lavage associé au module réactionnel sert au lavage des particules magnétiques précitées entre les incubations.

Cet appareil a l'avantage de permettre une automatisation intégrale des techniques ELISA, RIA, FIA, LIA, FPIA, CLIA, etc. et s'applique notamment à la détection sur un même échantillon d'antigènes, de ligands, d'antiligands, d'haptènes ou de toute autre substance biologique ou non biologique éventuellement présente dans l'échantillon à analyser.

Cet appareil présente également les avantages suivants :
- on peut réaliser un dosage multiparamétrique à accès aléatoire des échantillons,
- on peut obtenir une cadence de dosage élevée (par exemple 100 dosages en 50 minutes),
- la calibration de l'ensemble des réactifs peut être réalisée à l'aide d'un calibrant multiparamétrique.

Dans un mode de réalisation de cet appareil, le module réactionnel supporte quatre groupes de 25 cuvettes de réaction, soit un total de 100 cuvettes, et chaque cycle complet de fonctionnement de l'appareil correspond au traitement de 100 cuvettes, soit 99 dosages et un témoin. A la fin de chaque cycle, l'appareil s'arrête et l'opérateur doit retirer les quatre groupes de 25 cuvettes utilisées, les remplacer sur le module réactionnel par quatre groupes de nouvelles cuvettes, retirer du module échantillon les tubes contenant les échantillons dont les dosages viennent d'être effectués et les remplacer par des tubes contenant de nouveaux échantillons à analyser, et saisir, sur le clavier de commande du système informatique, une nouvelle liste de travail (nom du ou des patients, nature des dosages à réaliser, etc.). Comme les groupes de cuvettes sont fixés sur le plateau rotatif du module réactionnel, leur remplacement ne peut se faire qu'à l'arrêt complet de l'appareil. L'ensemble de ces opérations dure une quinzaine de minutes et ralentit donc la cadence de fonctionnement de l'appareil sur des périodes prolongées.

On pourrait bien entendu, pour éviter d'arrêter l'appareil à la fin de chaque cycle de fonctionnement, laisser les cuvettes de réaction sur le module réactionnel et associer à ce module des moyens de nettoyage des cuvettes. Il faudrait cependant pour cela augmenter le nombre de positions successives par lesquelles passent chacune des cuvettes de réaction, ces opérations de nettoyage étant nécessairement réalisées en plusieurs étapes, ce qui conduirait à augmenter la durée de chaque cycle de fonctionnement de l'appareil et ne permettrait pas de gagner du temps.

Le document EP-A-0410645 décrit un appareil de ce genre, comprenant une station de lavage de particules magnétiques et une station de lavage des cuvettes, qui sont situées d'un côté et de l'autre respectivement d'une station d'analyse des résultats de dosage, et prévoit la possibilité de n'utiliser qu'une de ces stations pour le lavage des particules magnétiques et le lavage des cuvettes lorsque le temps de cycle le permet, car cela conduit nécessairement à une augmentation de la durée d'un cycle de fonctionnement de l'appareil.

La présente invention a notamment pour but d'éviter cet inconvénient.

Elle a pour objet un appareil du type précité, dans lequel les cuvettes portées par le module réactionnel peuvent être nettoyées automatiquement à la fin de chaque dosage, ce qui évite de les retirer et de les remplacer par des cuvettes neuves, et cela sans augmenter la durée du cycle de fonctionnement de l'appareil.

Elle propose, à cet effet, un appareil automatique de dosage immunologique d'au moins une substance dans une pluralité d'échantillons à analyser, cet appareil comprenant un module rotatif de support d'échantillons, un module rotatif de support d'une pluralité de cuvettes réactionnelles, un module rotatif de support de réactifs dont l'un au moins est sous forme de particules magnétiques, des moyens d'entraînement pas à pas des modules rotatifs, des moyens permettant d'amener des quantités voulues des échantillons et des réactifs dans les cuvettes réactionnelles, des moyens de lecture des résultats, et une tête de lavage associée au module de support des cuvettes réactionnelles et placée immédiatement en aval des moyens de lecture des résultats par rapport au sens de défilement des cuvettes réactionnelles, cette tête comportant plusieurs groupes d'aiguilles d'injection et d'aspiration dans lesdites cuvettes d'un liquide de lavage desdites particules magnétiques, des moyens étant prévus pour appliquer un champ magnétique à ces particules afin de les maintenir dans les cuvettes pendant les phases d'aspiration de liquide, cet appareil étant caractérisé en ce que la tête de lavage comprend un groupe supplémentaire d'aiguilles pour l'injection d'un liquide de nettoyage des cuvettes et l'aspiration du contenu des cuvettes, l'ensemble des aiguilles de la tête étant utilisé pour le lavage des cuvettes, le groupe supplémentaire d'aiguilles étant au niveau d'une position des cuvettes dépourvue des moyens précités d'application d'un champ magnétique.

L'invention prévoit donc d'utiliser pour le nettoyage des cuvettes réactionnelles les moyens qui étaient déjà prévus sur l'appareil pour le lavage, au cours d'un dosage, des particules magnétiques qui constituent un réactif précité. Dans ces conditions, il suffit d'augmenter d'une unité le nombre de positions prévues sur le plateau rotatif du module réactionnel, ce qui ne modifie pas la durée totale d'un cycle de fonctionnement complet de l'appareil.

Avantageusement, le groupe supplémentaire d'aiguilles d'injection et d'aspiration se trouve sur la tête de lavage en amont des groupes précités d'aiguilles d'injection et d'aspiration du liquide de lavage des particules magnétiques, par rapport au sens de défilement des cuvettes réactionnelles.

Ainsi, les groupes préexistants d'aiguilles d'injection et d'aspiration d'un liquide de lavage des particules magnétiques, sont aussi utilisés pour parfaire le lavage des cuvettes réactionnelles.

Selon encore une autre caractéristique de l'invention, les aiguilles d'aspiration et d'injection du groupe supplémentaire précité sont juxtaposées pour agir simultanément dans une même cuvette réactionnelle.

De cette façon, le liquide de nettoyage des cuvettes est, en une seule étape, injecté dans une cuvette et aspiré de cette cuvette.

Dans un mode de réalisation de l'invention, le groupe supplémentaire précité d'aiguilles comprend une aiguille d'aspiration et deux aiguilles d'injection dont les extrémités libres comportent des moyens de pulvérisation de liquide sur les parois d'une cuvette réactionnelle.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique d'un appareil de dosage selon l'invention ;
- la figure 2 est une vue schématique en perspective de la tête de lavage utilisée dans cet appareil ;
- la figure 3 est une vue schématique d'une aiguille d'injection d'un liquide de nettoyage d'une cuvette réactionnelle ;
- les figures 4 et 5 représentent deux variantes de réalisation des aiguilles de nettoyage des cuvettes ;
- la figure 6 représente schématiquement les différentes étapes du nettoyage des cuvettes réactionnelles en fin de dosage.

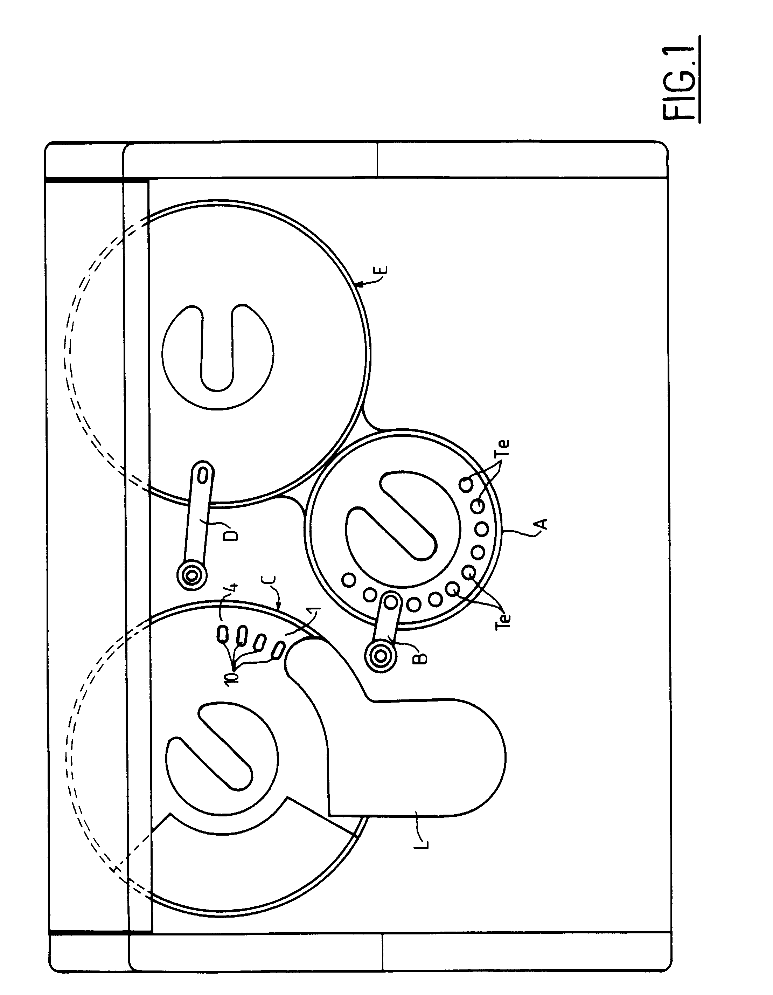

On se réfère d'abord à la figure 1, représentant schématiquement l'appareil selon l'invention, et qui correspond à la figure 1 de la Demande Internationale précitée WO91/07662 dont le contenu est incorporé ici par référence.

Cet appareil comprend, comme déjà décrit dans la Demande Internationale précitée, un module échantillons A, un module réactionnel C et un module réactifs E, chaque module comprenant une couronne ou un plateau rotatif équipé de supports de tubes ou de cuvettes et entraîné en rotation par un moteur électrique sous commande d'un système informatique qui assure notamment la synchronisation des rotations pas à pas des modules A, C et E en fonction des dosages à réaliser.

Des moyens de prélèvement et de distribution B sont prévus entre le module échantillons A et le module réactionnel C, pour prélever des quantités voulues d'échantillons à analyser dans les tubes à échantillons Te portés par le module échantillons A, et les distribuer dans les cuvettes réactionnelles 10 portées par le module réactionnel C, au fur et à mesure que ces cuvettes se succèdent dans la position numérotée 1 sur le dessin.

Des moyens D de prélèvement et de distribution de réactif sont prévus entre le module réactifs E et le module réactionnel C, pour prélever des quantités voulues de réactif et les distribuer dans les cuvettes réactionnelles 10 au fur et à mesure qu'elles arrivent à la position numérotée 4 sur le dessin.

Une tête de lavage L est associée au module réactionnel C et comprend des groupes d'aiguilles d'aspiration et d'injection de liquide dans les cuvettes réactionnelles, au fur et à mesure qu'elles passent dans un certain nombre de positions angulaires successives. Les aiguilles sont portées par un support guidé en déplacement vertical et associé à des moyens d'entraînement en mouvement vertical alternatif, pour descendre les aiguilles dans les cuvettes réactionnelles et ies remonter au-dessus de ces cuvettes.

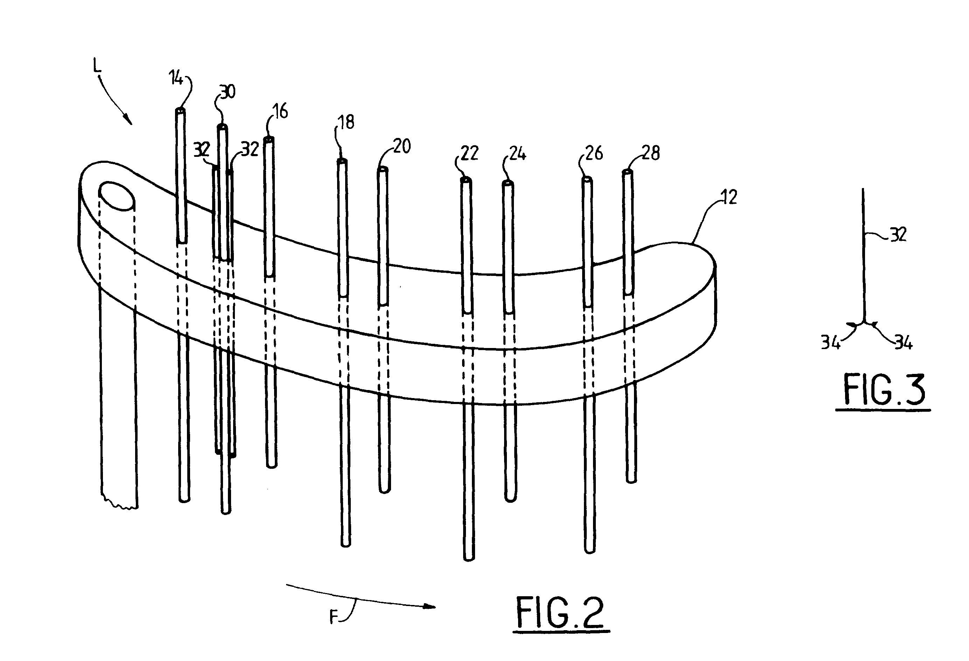

Comme on peut le voir sur la représentation schématique de la figure 2, ce support 12 comprend, comme déjà décrit dans la Demande Internationale précitée, une première aiguille 14 d'aspiration de liquide dans une cuvette réactionnelle, cette première aiguille 14 étant suivie, dans le sens de défilement des cuvettes réactionnelles indiqué par la flèche F, d'une aiguille 16 d'injection d'une solution de lavage, d'une aiguille 18 d'aspiration de liquide, d'une aiguille 20 d'injection de la solution de lavage, d'une aiguille 22 d'aspiration de liquide, d'une aiguille 24 d'injection de la solution de lavage, d'une aiguille 26 d'aspiration de liquide et d'une aiguille 28 d'injection d'un substrat.

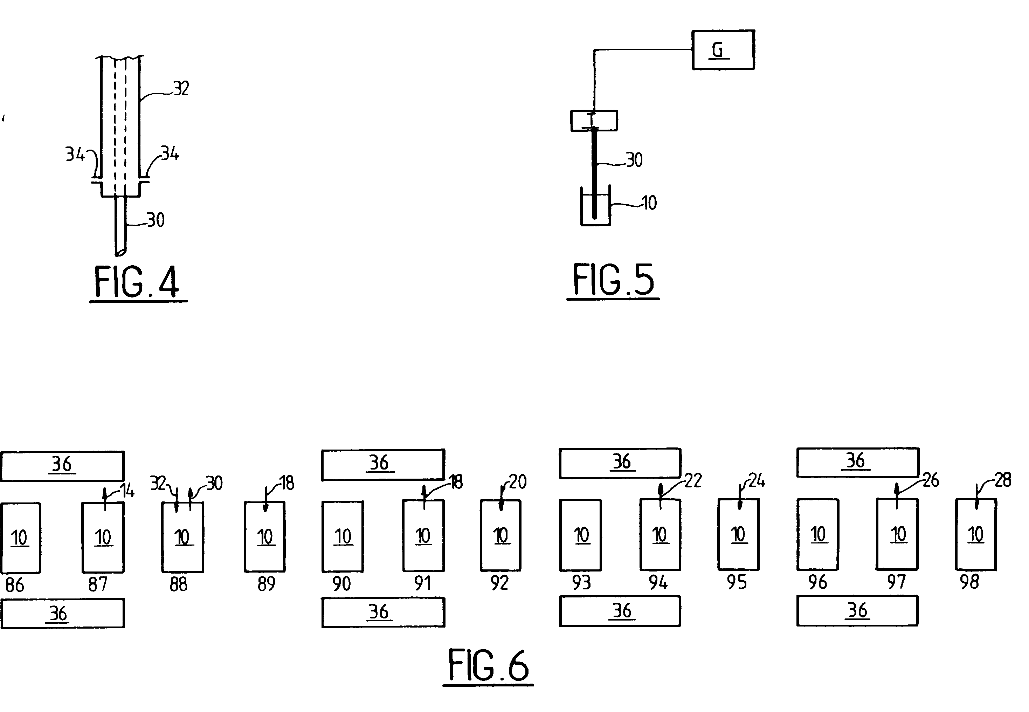

La solution de lavage injectée par les aiguilles 16, 20 et 24 est destinée au lavage des particules magnétiques constituant un réactif, au cours d'un dosage. Les aiguilles d'aspiration 18, 22 et 26 sont utilisées pour aspirer cette solution de lavage hors des cuvettes réactionnelles, les particules magnétiques constituant le réactif étant maintenues collées par attraction magnétique sur les parois des cuvettes réactionnelles, sous l'effet d'un champ magnétique généré par des aimants permanents disposés fixement de part et d'autre de la voie de passage des cuvettes réactionnelles, comme cela sera décrit plus en détail en référence à la figure 4.

La dernière aiguille 28 de la tête de lavage sert à injecter dans les cuvettes réactionnelles un substrat tel que le substrat de la phosphatase alcaline (PNPP) pour une incubation enzymatique avant lecture du résultat du dosage.

La distance entre deux aiguilles successives sur la tête de lavage correspond bien entendu au pas de rotation du module réactionnel, ou à un multiple de ce pas. On peut voir notamment que les aiguilles 18 et 20 sont séparées d'une distance égale à un pas de rotation, tandis que les aiguilles 20 et 22 sont séparées par une distance égale au double du pas de rotation.

Conformément à la présente invention, le support 12 comprend un groupe supplémentaire d'aiguilles d'injection et d'aspiration de liquide, qui seront utilisées pour le nettoyage des cuvettes réactionnelles à la fin des dosages. Ce groupe supplémentaire d'aiguilles d'injection et d'aspiration comprend au moins une aiguille d'aspiration et au moins une aiguille d'injection et, dans l'exemple représenté en figure 2, il comprend une aiguille d'aspiration 30 et deux aiguilles d'injection, qui sont juxtaposées pour agir sur la même cuvette réactionnelle arrêtée dans une position angulaire déterminée du module réactionnel. De plus, comme représenté schématiquement en figure 3, l'extrémité inférieure de chaque aiguille d'injection 32 peut être partagée en fourche pour former deux buses 34 de pulvérisation de liquide sur les parois internes d'une cuvette réactionnelle.

Ce groupe supplémentaire d'aiguilles 30, 32 est interposé entre la première aiguille 14 d'aspiration de liquide et la première aiguille 16 d'injection d'une solution de lavage et est à une distance des aiguilles 14 et 16 égale à un pas de rotation du module réactionnel.

Dans la variante de réalisation de la figure 4, le groupe supplémentaire d'aiguilles comprend une aiguille d'aspiration 30 et une aiguille d'injection 32 qui sont coaxiales, l'aiguille d'aspiration 30 s'étendant à l'intérieur de l'aiguille d'injection 32 dont l'extrémité inférieure comporte des buses latérales 34 orientées vers les parois des cuvettes réactionnelles.

Par ailleurs, il est avantageux, pour faciliter le décollement des particules magnétiques des parois des cuvettes et leur remise en suspension dans le liquide de nettoyage, de leur appliquer un champ ultrasonore, par exemple par l'intermédiaire de l'aiguille d'aspiration. Pour cela et comme représenté schématiquement en figure 5, on utilise un générateur alternatif G dont la sortie est reliée à un transducteur T solidaire de l'aiguille d'aspiration 30. Celle-ci, plongée dans le liquide de nettoyage contenu dans une cuvette réactionnelle 10, se comporte comme une "sonotrode" propageant les ultra-sons dans le liquide de nettoyage. La fréquence de ces ultra-sons peut être comprise entre 1Khz et 50 Mhz environ, et leur puissance entre 1 mW et 50 W, par exemple.

Le fonctionnement va maintenant être expliqué en référence à la figure 6 où l'on a repris, pour les positions successives occupées par les cuvettes réactionnelles, sensiblement les mêmes numérotations que dans la Demande Internationale précitée, pour faciliter la compréhension.

En position n° 1 (non représentée en figure 6), une quantité d'échantillons à analyser est déposée dans une cuvette réactionnelle 10 amenée dans cette position par rotation du module réactionnel.

En position 4 (non représentée en figure 6), une quantité d'un réactif constitué de particules magnétiques est déposée dans cette cuvette. Ces particules magnétiques sont couplées à une substance se liant spécifiquement à la substance à détecter dans l'échantillon à analyser.

L'échantillon et le réactif restent en contact pendant une durée appropriée, déterminée par la rotation pas à pas du module réactionnel entre les positions 4 et 86.

Deux aimants permanents 36 sont disposés de part et d'autre des cuvettes réactionnelles dans les positions 86 et 87 pour agir par attraction magnétique sur les particules magnétiques constituant le réactif, et coller ces particules magnétiques sur les parois des cuvettes réactionnelles. Les particules magnétiques subissent donc une pré-aimantation en position 86, puis une aimantation complémentaire en position 87. De plus, en position 87, la tête de lavage est descendue et le liquide contenu dans la cuvette réactionnelle est aspiré par l'aiguille 14, en laissant les particules magnétiques collées sur les parois de la cuvette réactionnelle.

En position 88, atteinte lors de la première rotation complète du module réactionnel, il ne se passe rien : les aiguilles 30 et 32 sont descendues par la tête de lavage dans la cuvette réactionnelle, mais ne sont pas fonctionnelles, les particules magnétiques restant collées sur les parois de la cuvette réactionnelle, et ne risquant donc pas de contaminer les aiguilles 30, 32.

Dans la position 89, une solution de lavage des particules magnétiques est injectée dans la cuvette réactionnelle par l'aiguille 16.

Au niveau des positions suivantes 90 et 91, on retrouve deux aimants permanents 36 qui exercent une attraction magnétique sur les particules magnétiques de réactif pour les coller sur les parois de la cuvette réactionnelle. Comme précédemment, une pré-aimantation a lieu en position 90, et une aimantation complémentaire en position 91. Dans cette position, le liquide contenu dans la cuvette réactionnelle est aspiré par l'aiguille 18.

Les mêmes opérations d'injection d'une solution de lavage des particules magnétiques sont répétées aux positions 92 et 95, les opérations de pré-aimantation et d'aimantation complémentaire par des aimants permanents 36 étant répétées aux positions 93 et 94, et 96 et 97 respectivement. Les opérations d'aspiration du liquide de lavage sont répétées aux positions 94 et 97, par les aiguilles 22 et 26 respectivement.

La cuvette réactionnelle est ensuite amenée en position 98, où elle reçoit une quantité de substrat injectée par l'aiguille 28.

Le substrat et le réactif restent en contact pendant une durée appropriée, pour une incubation enzymatique, jusqu'à ce que la cuvette réactionnelle atteigne une position 83 où a lieu la lecture du résultat du dosage, après une pré-aimantation réalisée dans la position 82 pour coller les particules magnétiques sur les parois de la cuvette réactionnelle.

Par rotation du module réactionnel, la cuvette réactionnelle est ensuite amenée une nouvelle fois en position 86 où les particules magnétiques subissent une pré-aimantation, puis en position 87 où elles subissent une aimantation complémentaire et où le liquide contenu dans la cuvette réactionnelle est aspiré par l'aiguille 14.

Dans la position suivante 88, une solution de lavage ou de nettoyage de la cuvette réactionnelle est injectée dans cette cuvette par la ou les aiguilles 32 dont les buses 34 projettent des jets de liquide sur les parois de la cuvette, et de préférence au voisinage des angles de celle-ci, pour créer dans la cuvette un écoulement tourbillonnaire de liquide permettant de remettre en suspension les particules magnétiques qui ne sont plus soumises au champ magnétique produit par les aimants 36 dans les positions 86 et 87 et qui peuvent donc être décollées des parois.

De préférence, les particules magnétiques sont également soumises à ce moment au champ ultrasonore produit par le générateur G, le transducteur T et l'aiguille d'aspiration 30 dans le liquide contenu dans la cuvette 10.

Simultanément, le liquide de lavage ou de nettoyage dans lequel les particules magnétiques sont remises en suspension, est aspiré et éliminé par l'aiguille 30.

Dans la position suivante 89, une solution de lavage est à nouveau injectée dans la cuvette réactionnelle par l'aiguille 16, pour parfaire le nettoyage réalisé en position 88, puis est aspirée de cette cuvette par l'aiguille 18 dans la position 91. Ces opérations d'injection de solution de lavage et d'aspiration sont encore répétées aux positions 92 et 94, puis 95 et 97. La rotation du module réactionnel ramène ensuite la cuvette réactionnelle en position 1, où elle peut recevoir une quantité d'un nouvel échantillon à analyser.

La description qui précède concerne le fonctionnement de l'appareil dans le cas d'un dosage monoréactif (par exemple HCG, prolactine, etc.). Dans le cas d'un dosage biréactif (Toxo G, chlamydia, rubéole, etc.), le module réactionnel effectue un tour complet supplémentaire, le premier tour étant utilisé pour effectuer une première réaction au moyen d'un premier réactif constitué par des particules magnétiques, le deuxième tour servant à une deuxième réaction au moyen d'un deuxième réactif ou conjugué, le troisième tour servant à l'incubation enzymatique, à la lecture du résultat et au nettoyage des cuvettes réactionnelles.

Les étapes essentielles du fonctionnement de l'appareil selon l'invention dans le cas des dosages monoréactifs et des dosages biréactifs, sont rappelées dans le tableau ci-dessous.

| **POSITIONS DU MODULE REACTIONNEL** | **DOSAGE MONOREACTIF** | **DOSAGE BIREACTIF** |
|---|---|---|
| **1** | Dépôt Echantillon | Dépôt Echantillon |
| | | |
| **4** | Dépôt Monoréactif | Dépôt Réactif R1 |
| | | |
| **86** | Préaimantation | Préaimantation |
| **87** | Aimantation-Aspiration | Aimantation-Aspiration |
| **88** | | |
| **89** | Lavage | Lavage |
| **90** | Préaimantation | Préaimantation |
| **91** | Aimantation-Aspiration | Aimantation-Aspiration |
| **92** | Lavage | Lavage |
| **93** | Préaimantation | Préaimantation |
| **94** | Aimantation-Aspiration | Aimantation-Aspiration |
| **95** | Lavage | Lavage |
| **96** | Préaimantation | Préaimantation |
| **97** | Aimantation-Aspiration | Aimantation-Aspiration |
| **98** | Dépôt Substrat | |
| | | |
| **4** | | Dépôt Réactif R2 |
| | | |
| **82** | Préaimantation | |
| **83** | Lecture du Résultat | |
| **86** | Préaimantation | Préaimantation |
| **87** | Aimantation Aspiration du Surnageant | Aimantation-Aspiration |
| **88** | Aspiration des particules | |
| **89** | Lavage | Lavage |
| **90** | Préaimantation | Préaimantation |
| **91** | Aimantation-Aspiration | Aimantation-Aspiration |
| **92** | Lavage | Lavage |
| **93** | Préaimantation | Préaimantation |
| **94** | Aimantation-Aspiration | Aimantation-Aspiration |
| **95** | Lavage | Lavage |
| **96** | Préaimantation | Préaimantation |
| **97** | Aimantation-Aspiration | Aimantation-Aspiration |
| **98** | | Dépôt Substrat |
| **1** | Dépôt d'un nouvel Echantillon | |
| | | |
| **4** | Dépôt d'un nouveau Réactif | |
| | | |
| **82** | | Préaimantation |
| **83** | | Lecture du Résultat |
| **86** | | Préaimantation |
| **87** | | Aimant-Aspiration du surnageant |
| **88** | | Aspiration des particules |
| **89** | | Lavage |
| **90** | | Préaimantation |
| **91** | | Aimantation-Aspiration |
| **92** | | Lavage |
| **93** | | Préaimantation |
| **94** | | Aimantation-Aspiration |
| **95** | | Lavage |
| **96** | | Préaimantation |
| **97** | | Aimantation-Aspiration |
| **1** | | Dépôt d'un nouvel Echantillon |
| | | |
| **4** | | Dépôt d'un nouveau Réactif |

De façon générale, l'invention permet :
- un fonctionnement continu de l'appareil de dosage,
- de gagner un temps non négligeable, en autorisant l'initiation de nouveaux dosages dès la fin du deuxième tour de rotation du module réactionnel dans le cas des dosages monoréactifs et en supprimant l'obligation qui existait dans la technique antérieure d'arrêter l'appareil pendant un temps suffisant pour remplacer les cuvettes réactionnelles usagées, remplacer les échantillons dont les dosages ont été effectués par de nouveaux échantillons, et entrer sur le système informatique les informations relatives aux dosages à effectuer sur les nouveaux échantillons, ces deux dernières opérations étant selon l'invention réalisées pendant que se terminent les dosages précédemment demandés,
- de faire l'économie des cuvettes réactionnelles qui étaient en général jetées après une seule utilisation dans la technique antérieure.

Dans une variante de l'invention, on peut supprimer l'étape d'incubation enzymatique et la remplacer par le dépôt dans la cuvette réactionnelle d'un marqueur luminescent ou chimioluminescent, suivi immédiatement de la lecture du résultat, ce qui permet de supprimer le deuxième tour de rotation du module réactionnel dans le cas d'un dosage monoréactif, ou le troisième tour de ce module dans le cas d'un dosage biréactif. Il est alors avantageux de disposer le groupe supplémentaire d'aiguilles d'injection et d'aspiration sur la tête de lavage, en aval des aiguilles normalement utilisées pour le lavage des particules magnétiques, et non plus en amont de ces aiguilles.

## Revendications

1. Appareil automatique de dosage immunologique d'au moins une substance dans une pluralité d'échantillons à analyser, comprenant un module rotatif (A) de support d'échantillons, un module rotatif (C) de support d'une pluralité de cuvettes réactionnelles (10), un module rotatif (E) de support de réactifs dont l'un au moins est sous forme de particules magnétiques, des moyens d'entraînement pas à pas des modules rotatifs (A, C, E), des moyens (B, D) permettant d'amener des quantités voulues des échantillons et des réactifs dans les cuvettes réactionnelles (10), des moyens de lecture des résultats, et une tête de lavage (L) associée au module (C) de support des cuvettes réactionnelles et placée immédiatement en aval des moyens de lecture des résultats par rapport au sens de défilement (F) des cuvettes réactionnelles, cette tête comportant plusieurs groupes d'aiguilles d'injection et d'aspiration dans lesdites cuvettes d'un liquide de lavage desdites particules magnétiques, des moyens (36) étant prévus pour appliquer un champ magnétique à ces particules afin de les maintenir dans les cuvettes pendant les phases d'aspiration de liquide, caractérisé en ce que la tête de lavage (L) comprend un groupe supplémentaire d'aiguilles (30, 32) pour l'injection d'un liquide de nettoyage des cuvettes et l'aspiration du contenu des cuvettes, l'ensemble des aiguilles de la tête étant utilisé pour le lavage des cuvettes, le groupe supplémentaire d'aiguilles (30, 32) étant au niveau d'une position des cuvettes dépourvue des moyens précités (36) d'application d'un champ magnétique.

2. Appareil selon la revendication 1, caractérisé en ce que les aiguilles (30, 32) d'aspiration et d'injection du groupe supplémentaire précité sont juxtaposées pour agir simultanément dans une même cuvette réactionnelle.

3. Appareil selon la revendication 1 ou 2, caractérisé en ce que le groupe supplémentaire d'aiguilles (30, 32) d'injection et d'aspiration se trouve sur la tête de lavage en amont des groupes précités d'aiguilles d'injection et d'aspiration du liquide de lavage des particules magnétiques, par rapport au sens de défilement (F) des cuvettes réactionnelles.

4. Appareil selon l'une des revendications 1 à 3, caractérisé en ce que le groupe supplémentaire d'aiguilles (30, 32) d'injection et d'aspiration se trouve sur la tête de lavage en aval d'une première aiguille (14) d'aspiration de liquide dans les cuvettes, par rapport au sens de défilement de celles-ci.

5. Appareil selon la revendication 1 ou 2, caractérisé en ce que le groupe supplémentaire d'aiguilles se trouve sur la tête de lavage en aval des groupes précités d'aiguilles d'injection et d'aspiration du liquide de lavage des particules magnétiques, par rapport au sens de défilement des cuvettes réactionnelles.

6. Appareil selon l'une des revendications précédentes, caractérisé en ce que le groupe supplémentaire d'aiguilles comprend au moins une aiguille d'aspiration (30) et au moins une aiguille d'injection (32) dont l'extrémité libre comporte des moyens (34) de pulvérisation de liquide sur les parois des cuvettes.

7. Appareil selon l'une des revendications 1 à 6, caractérisé en ce que les aiguilles d'aspiration et d'injection du groupe supplémentaire sont coaxiales, l'aiguille d'aspiration étant contenue dans l'aiguille d'injection et s'étendant au-delà de l'extrémité de cette dernière.

8. Appareil selon l'une des revendications 1 à 6, caractérisé en ce qu'il comprend des moyens d'application d'un champ ultrasonore aux particules magnétiques pour leur remise en suspension dans les cuvettes, ces moyens comportant un générateur alternatif relié à un transducteur solidaire de l'aiguille d'aspiration du groupe supplémentaire précité.

9. Appareil selon l'une des revendications précédentes, caractérisé en ce qu'il est à fonctionnement continu.

## Patentansprüche

1. Automatische Einrichtung für die immunologische Dosierung von wenigstens einer Substanz in einer Mehrzahl von zu analysierenden Proben, umfassend ein Drehmodul (A) als Träger der Proben, ein Drehmodul (C) als Träger einer Mehrzahl von Reaktionsküvetten (10), ein Drehmodul (E) als Träger von Reagentien, von denen wenigstens das eine die Form von magnetischen Teilchen hat, Mittel für den Schrittantrieb der Drehmodule (A, C, E), Mittel (B, D), die es ermöglichen, benötigte Mengen an Proben und an Reagentien in die Reaktionsküvetten (10) zuzuführen, Mittel zum Lesen der Resultate und einen Waschkopf (L), der dem Modul (C) für das Tragen der Reaktionsküvetten verbunden bzw. demselben zugeordnet und im Sinn des Vorbeiziehens (F) der Reaktionsküvetten unmittelbar abwärtig von den Mitteln für das Lesen der Resultate plaziert ist, wobei dieser Kopf mehrere Gruppen von Nadeln für die Injektion und die Aspiration einer Waschflüssigkeit für die magnetischen Teilchen in die bzw. aus den Küvetten hat, wobei Mittel (36) für das Anwenden eines Magnetfelds auf diese Teilchen zu dem Zweck, sie während der Phasen der Aspiration der Flüssigkeit in den Küvetten zu halten, vorgesehen sind, dadurch **gekennzeichnet,** daß der Waschkopf (L) eine zusätzliche Gruppe von Nadeln (30, 32) für die Injektion einer Flüssigkeit für die Reinigung der Küvetten und für die Aspiration des Inhalts der Küvetten umfaßt, wobei die Gesamtheit der Nadeln des Kopfs für das Waschen der Küvetten verwendet wird, wobei die zusätzliche Gruppe von Nadeln (30, 32) auf dem Niveau einer Position der Küvetten ist, die nicht mit den vorgenannten Mitteln (36) für die Anwendung eines Magnetfelds versehen ist.

2. Einrichtung gemäß Anspruch 1, dadurch **gekennzeichnet,** daß die Nadeln (30, 32) der erwähnten zusätzlichen Gruppe für die Aspiration und die Injektion von zum gleichzeitigen Wirken in einer gleichen Reaktionsküvette nebeneinander stehen.

3. Einrichtung gemäß Anspruch 1 oder 2, dadurch **gekennzeichnet,** daß sich die zusätzliche Gruppe von Nadeln (30, 32) für die Injektion und die Aspiration auf dem Waschkopf mit Bezug auf die Richtung des Vorbeiziehens (F) der Reaktionsküvetten aufwärts von vorgenannten Gruppen von Nadeln für die Injektion und die Aspiration der Waschflüssigkeit für die magnetischen Teilchen befindet.

4. Einrichtung gemäß einem der Ansprüche 1 bis 3, dadurch **gekennzeichnet,** daß sich die zusätzliche Gruppe von Nadeln (30, 32) für die Injektion und die Aspiration mit Bezug auf die Richtung des Vorziehens der Küvetten abwärts von einer ersten Nadel (14) für die Aspiration der Flüssigkeit in den Küvetten auf dem Waschkopf befindet.

5. Einrichtung gemäß Anspruch 1 oder 2, dadurch **gekennzeichnet,** daß sich die zusätzliche Gruppe von Nadeln mit Bezug auf die Richtung des Vorbeiziehens der Reaktionsküvetten abwärts von vorgenannten Gruppen'von Nadeln für die Injektion und die Aspiration der Waschflüssigkeit für die magnetischen Teilchen auf dem Waschkopf befindet.

6. Einrichtung gemäß einem der vorhergehenden Ansprüche, dadurch **gekennzeichnet,** daß die zusätzliche Gruppe von Nadeln wenigstens eine Nadel für die Aspiration (30) und wenigstens eine Nadel für die Injektion (32) umfaßt, deren freies Ende Mittel (34) für die Zerstäubung von Flüssigkeit auf bzw. über den Wänden der Küvetten hat.

7. Einrichtung gemäß einem der Ansprüche 1 bis 6, dadurch **gekennzeichnet,** daß die Nadeln der zusätzlichen Gruppe für die Aspiration und die Injektion koaxial sind, wobei die Nadel für die Aspiration in der Nadel für die Injektion enthalten ist und sich über das äußere Ende dieser letzteren hinaus erstreckt.

8. Einrichtung gemäß einem der Ansprüche 1 bis 6, dadurch **gekennzeichnet,** daß sie Mittel für die Anwendung eines Ultraschallfelds auf die magnetischen Teilchen, damit diese in Suspension in den Küvetten bleiben, umfaßt, wobei diese Mittel einen Steuer- bzw. Wechselstromgenerator enthalten, der mit einem Umsetzer verbunden ist, welcher mit der Nadel für die Aspiration aus der vorgenannten zusätzlichen Gruppe verbunden bzw. kraftschlüssig verbunden ist.

9. Einrichtung gemäß einem der vorhergehenden Ansprüche, dadurch **gekennzeichnet,** daß sie eine solche für kontinuierlichen Betrieb ist.

## Claims

1. Automatic apparatus for immunological assay of at least one substance in a plurality of samples to be analyzed, the apparatus comprising a rotary module (A) for supporting samples, a rotary module (C) for supporting a plurality of reaction vessels (10), a rotary module (E) for supporting reagents, at least one of which is in the form of magnetic particles, means for driving the rotary modules (A, C, E) stepwise, means (B, D) enabling desired quantities of samples and of reagents to be conveyed into the reaction vessels (10), means for reading the results, and a washing head (L) associated with the support module (C) for the reaction vessels and placed immediately downstream of the means for reading the results, "downstream" being relative to the travel direction (F) of the reaction vessels, said head including a plurality of groups of injection and suction needles for injecting a washing liquid for said magnetic particles into said vessels and for sucking it up, means (36) being provided for applying a magnetic field to said particles in order to keep them in the vessels during the liquid suction stages, the apparatus being characterized in that the washing head (L) comprises an additional group of needles (30, 32) for injecting a vessel-cleaning liquid and for sucking up the contents of the vessels, the set of needles of the head being used for cleaning the vessels, the additional group of needles (30, 32) being at a vessel position which is not provided with the above-mentioned means (36) for applying a magnetic field.

2. Apparatus according to claim 1, characterized in that the suction and injection needles (30, 32) of the above-mentioned additional group are juxtaposed to act simultaneously in a single reaction vessel.

3. Apparatus according to claim 1 or 2, characterized in that the additional group of injection and suction needles (30, 32) is located on the washing head upstream from the above-mentioned groups of needles for injecting and sucking up the liquid for washing the magnetic particles, "upstream" being relative to the travel direction (F) of the reaction vessels.

4. Apparatus according to any one of claims 1 to 3, characterized in that the additional group of injection and suction needles (30, 32) is located on the washing head downstream from a first needle (14) for sucking up liquid from the vessels, "downstream" being relative to the travel direction thereof.

5. Apparatus according to claim 1 or 2, characterized in that the additional groups of needles is located on the washing head upstream from the above-mentioned groups of needles for injecting and sucking up the washing liquid for the magnetic particles, "downstream" being relative to the travel direction of the reaction vessels.

6. Apparatus according to any preceding claim, characterized in that the additional groups of needles include at least one suction needle (30) and at least one injection needle (32) whose free end includes means (34) for spraying liquid on the walls of the vessels.

7. Apparatus according to any one of claims 1 to 6, characterized in that the suction and injection needles of the additional group are coaxial, the suction needle being contained inside the injection needle and extending beyond the end thereof.

8. Apparatus according to any one of claims 1 to 6, characterized in that it includes means for applying an ultrasound field to the magnetic particles to put them back into suspension in the vessels, said means comprising an AC generator connected to a transducer secured to the suction needle of the above-mentioned additional group.

9. Apparatus according to any preceding claim, characterized in that it operates continuously.
